# EUROPEAN PATENT APPLICATION

(11) **EP 1 873 188 A1**
(43) Date of publication of application: **02.01.2008**
(21) Application number: 06012496.3
(22) Date of filing: 19.06.2006
(51) Int. Cl.: C08G 69/44, C09D 177/12

(54) **Polyesteramides and compositions comprising them**

(71) Applicant: DSM IP Assets B.V., 6411 TE Heerlen (NL)
(72) Inventor: Molhoek, Leender Jan, 8072 HV Nunspeet (NL); Van Benthem, Rudolfus Antonius Theodorus Maria, 6141 BR Limbricht (NL); Friederichs, Joseph Petronella, 6019 CC Wessem (NL)
(74) Representative: van Tol-Koutstaal, Charlotte A.

(57) **Abstract**

Polyesteramide based on
a. at least one anhydride A1,
b. optionally at least one anhydride A2,
c. at least one di-alkanolamine,

wherein anhydride A1 is present in an amount of 50-100% based on the total amount of anhydride, and anhydride A2 is present in an amount of 0-50% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

## Description

The invention relates to polyesteramides, compositions comprising the polyesteramide and to the use of the polyesteramide or the composition comprising the polyesteramide. The invention also relates to the use of the polyesteramide in an additive composition suitable for water-borne coating compositions.

Polyesteramides are known from WO 99/16810. WO 99/16810 describes a broad class of polyesteramides in which all kinds of starting compounds for the synthesis of the polyesteramide can be chosen. The resulting polyesteramides from these syntheses have therefore very different properties, for example different physical properties like for example molecular weight, glass transition temperature (Tg), but also different chemical properties like for example their hydrophilic or hydrophobic character.

Polyesteramides can be used for example in coating compositions as part of the binder. The binder is generally defined to be the resinous part of a coating composition. The binder can comprise more than one resin. A coating composition will generally comprise next to the binder various other components like for example pigments, colorants, additives, flow promoters, degassing agents, rheology improvers, fillers and solvents. The number and nature of the various components depends on the final use of the coating composition. For example a powder coating composition will not include a solvent and a clear coat composition will generally not include a pigment.

A special field within the coating compositions is taken by water borne coating compositions. These coating compositions contain next to the binder and other in the this coating field usual components, water as one of the solvents. Water borne coating compositions are used more and more today as these coating compositions are generally more environmentally friendly than solvent-borne systems because, amongst others, of lower levels of volatile organic compounds (VOC). As the legislator in various countries and regions tends to be stricter on these issues, water borne coating compositions are favorably looked at. Therefore much research and development is spent on improving the water borne coating compositions.

One of the disadvantages of water borne coating compositions is connected to the drying behavior of the applied coating. The water borne coating composition is applied to a substrate. Generally more than one layer of a coating composition is applied, whereby the coating compositions for the various layers can and generally will have different compositions. Under certain conditions, such as for example warm weather or when the substrate-to-be-coated is rather large or complicated, it can occur that the separate paint layers do not absorb in each other well. A result, which can be visually detected easily, is a reduction in the gloss. The unsatisfactory absorption of the various layers is known in the art as "overspray" and "underspray". Overspray is when the paint particles adhere to the surface of the paint without becoming absorbed into the previously applied paint. Underspray is when the layer that is applied during the next spraying is not able to absorb or dissolve the previously applied paint particles.

In the water borne coating field it was tried to overcome these disadvantages by adding compounds that behave as a kind of "plasticizers", such as for example water-soluble polymers with a low glass transition temperature, such as for example polyethylene glycol, polypropylene glycol or other polyols. The addition of these plasticizers could sometimes reduce the problem, however the hardness of the final coating was less, the tackiness of the coating was higher and the tapeability of the coatings was less.

It was an object of the present invention to overcome these disadvantages and to make available a coating composition suitable for use as water borne coating composition that after application on a suitable substrate and curing, results in a coating with eliminated or at least reduced problems of over- and underspray. The eliminated or reduced problems of over- and underspray will result in a coating with better gloss.

This object was reached by the addition to the water borne coating composition of a novel, specially tailored polyesteramide. The polyesteramide according to the invention is based on
a. at least one anhydride A1,
b. optionally at least one anhydride A2,
c. at least one di-alkanol amine,
wherein anhydride A1 is present in an amount of 50-100 mol% based on the total amount of anhydride, and anhydride A2 is present in an amount of 0-50 mol% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

Succinic anhydride is preferred as the anhydride A1. Hexahydro phthalic anhydride is preferred as anhydride A2. Especially preferred is the combination of succinic anhydride with hexahydro phthalic anhydride in a ratio of 80/20% as this combination results in coatings with optimum combination of colour and hardness.

The di-alkanol amine used in the preparation is not particularly critical; the man skilled in the art can easily determine which di-alkanol amine suits his requirements best. Preferably a di-β-alkanol amine is used, more preferably di-isopropanol amine, diethanol amine or di-isobutanol amine or a combination of any of them is used, most preferably di-isopropanol amine is used.

The amount of anhydride A1 and A2 used is based on the total amount of anhydride, thus for example when 80% of anhydride A1 is used, 20% of anhydride A2 is used. Anhydride A1 and anhydride A2 can both, independently of each other, consist of a mixture of the specified anhydrides. Thus it is possible to use two different anhydrides for anhydride A1 combined with two different anhydrides for anhydride A2 or another possibility is that anhydride A1 consists of a mixture where anhydride A2 is a single anhydride or again another possibility is that anhydride A2 consists of a mixture where anhydride A1 is a single anhydride.

The addition of a minor amount, that is less than 50% of the total anhydride used, of anhydride A2 was sometimes found to be advantages because it could improve the hardness of the final coating. A very advantageous combination of reactants was found to be for the anhydride 80% succinic anhydride, 20% hexahydro phthalic anhydride combined with di-isopropanol amine as the di-alkanolamine.

An additional advantage of the polyesteramide according to the invention is that the hardness of the coating is not negatively influenced and that the tackiness is also not increased or at least less than the prior art solutions. A further advantage of the polyesteramide when used in a water borne coating composition is that the water sensitivity of the coating is not changed. It appeared that also other mechanical properties such as for example blistering sensitivity, wet adhesion and stone chip resistance were up to standard.

The polyesteramide according to the invention is obtainable by a process comprising at least the following steps:
1. reacting 50-100 mol% based on the total amount of anhydride of anhydride A1, optionally together with 0-50 mol% of anhydride A2, with at least one di-alkanolamine to an intermediate product and
2. performing a polycondensation reaction on the intermediate product obtained in the first step,
   whereby the components are chosen from the same compounds as described above.
   The general synthesis of polyesteramides is known in the state of the art. Reference can for example be made to WO 99/16810, which is hereby included by reference. The first step in the process according to the invention is performed at a temperature that is suitable for the components to react, therefore the temperature can vary when using different starting components. However the man skilled in the art can easily, by routine experimentation, determine the best temperature or temperature range. A generally suitable temperature range is 20-140 °C. Preferably a temperature between 40 and 100 °C is used. The temperature for the second step will also depend on the components chosen and can also easily be determined by the skilled person. A suitable temperature range will be 120-180 °C, preferably 130-170 °C.
   The polyesteramide according to the invention can be modified by the addition of a small amount of monoacid. With "monoacid" is meant a carboxylic acid with one carboxylic acid group available for reaction with a suitable functional group on another molecule. The addition of the monoacid will result in the modification of the functional end groups present on the polyesteramide as prepared in the process described above.
   The modified polyesteramide according to the invention is based on
   a. at least one anhydride A1,
   b. optionally at least one anhydride A2,
   c. at least one di-alkanolamine,
   d. optionally at least one monoacid
   wherein anhydride A1 is present in an amount of 50-100 mol% based on the total amount of anhydride, and anhydride A2 is present in an amount of 0-50 mol% based on the total amount of anhydride and the monoacid is present in an amount such that 0-25% of the functional end groups is modified by the monoacid. The components are chosen from the same compounds as described above.
   With small amount of monoacid is here and hereinafter meant that 0-25% of the functional end groups is modified by the monoacid. Preferably 0.5-15% of the functional end groups is modified, a lower amount of modification is preferred as this will positively influence the water solubility. The choice in monoacid is not particularly critical as long as the upper limit of the amount is not exceeded. Examples of suitable monoacids are linear or branched monocarboxylic acids with 1-20 carbon atoms, that can be used as mixtures. Preferably benzoic acid, 2-ethyl-hexanoic acid, acetic acid, butyric acid, versatic acid, lauric acid, stearic acid or mixtures of any of them are used, more preferably benzoic acid or 2-ethyl-hexanoic acid or mixtures thereof are used.
   The polyesteramide according to the invention that is modified with the monoacid can be obtained by the process as described above comprising an additional step:
3. adding a monoacid to the reaction mixture in step 2.
   The temperature for this step can be within the same range as for step 2. It is therefore also possible to combine step 3 with step 2.
   The ratio between the components in step 1 can be chosen freely to fit the needs of the specific composition wherein the polyesteramide will be used. The main limiting feature will be the viscosity so as to make it possible to handle the polyesteramide and its compositions. With a too high viscosity it will be very difficult for example to mix the polyesteramide according to the invention with other components and/or solvents. A suitable molar ratio of amine to anhydride is between 1.07 and 1.6. Preferably a ratio between 1.1 and 1.3 is used.

Step 2 of the process can be performed immediately after step 1 or after a certain time interval. In step 2 of the process, the intermediate product obtained in the first step is condensed to form a polymeric material. A polycondensation reaction of this type is in general known from the prior art.

Depending on the ratio between the anhydride and the di-alkanol amine used in step 1 of the process, a polyesteramide is obtained with a higher amount of hydroxyl end groups than acid end groups. These end groups are sometimes referred to as functional end groups. The amount of hydroxyl groups is determined by the titration of the hydroxyl groups with acetic acid and the back titration with KOH. The amount of hydroxyl groups is expressed as the hydroxyl-value (OH-value, OHV) in milligram KOH used per g polyesteramide. A generally obtained OH-value for the polyesteramides according to the invention is between 150 and 500 mg KOH/g, preferably between 200 and 480 mg KOH/g, more preferably between 250 and 350 mg KOH/g, most preferably 285-350 mg KOH/g. With an OH-value within the preferred range a better balance between hardness of the final coating and the water solubility can be obtained.

The acid value is generally much lower than the hydroxyl value for the polyesteramides according to the invention. The amount of acid groups is determined by the titration of the acid/ anhydride groups by KOH. The amount of acid groups is expressed as the acid- value (AV) in mg KOH/ g polyesteramide. A generally obtained acid value for the polyesteramides according to the invention is between 0 and 20 mg KOH/g, preferably between 1 and 15, more preferably between 2 and 10 most preferably less than 5. With an acid value within the preferred range better stability can be obtained. The acid value for the polyesteramide in solution will generally be less than 60, preferably less than 40, more preferably less than 20 mg KOH/g.

The molecular weight of the polyesteramide that is obtained in the condensation reaction in step 2, can vary within wide ranges and is mainly determined by the ratio of the reactants in the preparation process. Generally a polyesteramide will be obtained with a molecular weight, determined as the number average molecular weight, Mn, between 500 and 2500, preferably between 800 and 2000, more preferably between 1000 and 1600. The Mn is determined by gel permeation chromatography (GPC) against a polystyrene standard using universal calibration.

The glass transition temperature (Tg) of the polyesteramide according to the invention can be varied by the choice of the starting components in step 1 and 2 of the process as described above and thus tailored to the needs. Generally the Tg of the polyesteramide will be between -10°C and 110°C, preferably the Tg is between 20 and 100°C, more preferably between 30 and 75°C. Surprisingly it was found that the polyesteramide according to the invention had a high Tg even at relatively low molecular weight (Mn). A high Tg is advantageous because of increased hardness of the final coating when using resins or other components with higher Tg. The Tg is measured by differential scanning calorimetry (DSC) at a scan rate of 10°C/min.

An especially preferred polyesteramide has an OH-value between 300 and 400 mg KOH/g, an acid value between 2 and 8 mg KOH/g and a Tg between 30 and 75°C.

The invention also relates to a process for the preparation of a polyesteramide according to the invention. The process comprises at least the following steps:
1. reacting 50-100 mol% based on the total amount of anhydride of anhydride A1, optionally together with 0-50 mol% of anhydride A2, with at least one di-alkanolamine to an intermediate product and
2. performing a polycondensation reaction on the intermediate product obtained in the first step,
3. optionally adding a monoacid to the reaction mixture in step 2.
wherein anhydride A1 is present in an amount of 50-100 mol% based on the total amount of anhydride, and anhydride A2 is present in an amount of 0-50 mol% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

The invention also relates to a binder composition comprising at least one polyesteramide according to the invention and at least one crosslinker. Such a binder composition can comprise next to the polyesteramide other resins. It can comprise more than one crosslinker. The one or more crosslinker can be chosen depending on the nature of the polyesteramide or other resins in the binder. A suitable crosslinker when the binder consists only of one or more polyesteramides, is for example an internal blocked isocyanate-based crosslinker, TGIC or a carboxyl-functional polyester

The binder composition according to the invention can be used for the preparation of a coating composition. Depending on the nature of the binder it can be used in solvent-borne, water-borne or powder coating compositions. The binder according to the invention gives the coating composition very advantageous properties. So is it for water-borne coating compositions comprising the binder according to the invention possible to overcome or at least reduce the problems with over- and underspray. For solvent-borne coating compositions the use of the binder makes it possible to reduce the VOC (Volatile Organic Compounds)- level connected to the solvent-borne coating composition. For powder coating compositions, the use of the binder can result in increased stability of the powder coating composition and to increased hardness of the final coating. Therefore the invention also relates to a coating composition comprising the binder composition according to the invention.

The invention also relates to a solution comprising the polyesteramide according to the invention and at least one solvent for the polyesteramide. The solution according to the invention can advantageously be used, for example as part of the binder composition, to prepare coating compositions that will benefit from the addition of a relatively small amount of polyesteramide according to the invention. With relatively small amount of polyesteramide is meant here between 0.1 and 35 w% polyesteramide calculated on the total weight of the composition. Preferably the polyesteramide is used in an amount between 0.5 and 25 w%, more preferably between 1 and 15 w%.

It was surprisingly found that a solution according to the invention leads to a low solution viscosity of the binder compared to generally known binders. This low solution viscosity offers the possibility to add more binder to a coating composition without giving rise to unacceptable high application viscosities.

By using the solution according to the invention, the polyesteramide according to the invention can more easily be combined and mixed with the other components making up the coating composition. In this way it is for example easier to adjust the viscosity of the polyesteramide-containing solution so that the solution will better combine with the coating composition. It is an advantage that the viscosity can be adjusted in this way as the mixing apparatus can better handle components with viscosities in the same range. The invention especially relates to a solution comprising at least one polyesteramide and a solvent, whereby the solution has a viscosity of 1-5 Pa.s under a shear of 100 s⁻¹ at a polyesteramide concentration of 55-70% (solid content) (Determination according to ISO 3219).

The solution comprising the polyesteramide can be added to all sorts of compositions, for example coating compositions, water-borne coating compositions, water-dilutable coating compositions and solvent-borne coating compositions. The addition of the solution according to the invention proved particularly advantageous for water borne coating compositions and more particularly to water borne base coats as the addition of the solution according to the invention to the particular coating composition resulted in coating compositions with no or at least reduced problems of over- and underspray. Additionally the application window was improved by the addition of the solution. With application window is meant the time span which is available to make corrections to an applied coating layer without damaging the appearance of the coating.

The solution comprises next to the polyesteramide at least one solvent for it. This means that the solvent can be chosen freely as long as it is able to dissolve the polyesteramide. Examples of suitable solvents are water, alcohols, ethers, and ether alcohols having a boiling point at atmospheric pressure in the range of 130°-250°C and mixtures of any of them. Examples include 2-ethylhexanol, 4-methyl-2-pentanol, benzyl alcohol, ethyleneglycol monobutyl ether, diethyleneglycol monobutylether; diethyleneglycol monoethyl ether; ethyleneglycol phenyl ether; propyleneglycol monobutylether, dipropyleneglycol monomethylether; dipropyleneglycol monoethylether, tripropyleneglycol monoethylether and dipropyleneglycol-dimethylether or a combination of any of them. Preferably water is used as the solvent as by using water as the solvent the level of VOC-compounds is kept relatively low.

The invention also relates to a coating composition comprising at least one polyesteramide and at least one component chosen from the list solvent, diluent, dispersant, crosslinker, pigment, dye and one of the usual additives for coating compositions. The polyesteramide according to the invention can be used as sole resin or in combination with other resins. With usual additives is meant here additives that are usually added to a coating composition and are well-known to the man skilled in the art. Examples of usual additives are rheology improver, flow improver, degassing aid, anti-oxidant, cure catalyst, tribo chargeability enhancer, fillers, dispersing agents, anti-or de-foaming agents and (light)stabilizers, thickeners, wetting agents, anti-skinning agents, anti-sedimentation agents, anti-flocculation agents, flatting agents, adhesion promoters, structural additives, gloss-enhancing additives and catalysts.

Depending on the type of coating composition, the component present next to the polyesteramide, can vary. So for example a tribo-chargeability enhancer will generally only be found in coating compositions for powder coatings. The coating composition according to the invention is however not limited to powder coating compositions, also solvent-borne or water-borne coating compositions can benefit from the addition of the polyesteramide according to the invention. Especially water-borne can benefit from the present invention.

The invention also relates to a substrate fully or partially coated with a coating composition according to the invention. The choice of substrate is not particularly critical and will generally depend on the future use of the substrate, therefore both organic and inorganic substrates can be used. Examples of substrates are wood, carton, paper, leather, cork, metal, plastic, composite material, corrugated cardboard, fiberboard, glass, ceramics, stone, concrete. Preferably metal or plastic is used, more preferably a metal car body is used as the substrate.

The substrate coated with a coating composition according to the invention, that is with a composition that at least comprises one polyesteramide according to the invention, displays improved properties regarding its hardness and appearance such as for example its gloss.

The substrate that is fully or partially coated with a coating composition according to the invention will generally undergo some form of physical, thermal or radiation curing. Curing may be carried out at room temperature or at an elevated temperature, for example reached by the use of an oven, for example gas oven or electric oven, or infrared radiation. A suitable temperature for curing in an oven lies within the range of 60-180 °C, preferably 80-120 °C. The curing can be effected to take place in one step or it is possible to use two or more steps of curing. When two or more steps are used it is possible that in each step the same technique is applied or it is possible that different techniques are used, for example a combination of thermal curing in combination with radiation curing. After the cure is finished, the coating composition according to the invention is fully or partially cured, resulting in a fully or partially cured coating on the substrate's surface. The coating that is obtained from the coating composition according to the invention has very advantageous properties. It was found that sometimes the tackiness of the final coating had improved and that often the gloss was improved. Therefore the invention also relates to a coating obtained after curing a coating composition according to the invention.

The invention also relates to the use of the polyesteramide, of the binder comprising it, of the solution comprising it, of the composition comprising the polyesteramide all according to the invention in a coating application. The polyesteramide or one of the compositions comprising it is preferably used in water borne coating compositions, more preferably in water borne base coats.

The invention will be elucidated with reference to the following, nonlimiting examples.

### Experimental part

### Method used for determining underspray absorption:

The ready-to-spray (RTS) mixtures of basecoat and additive composition were applied by use of a spraying machine. Spray gun used: Satajet RP nozzle 1.4. Test conditions: 30-35 °C and 15-30 % relative humidity. Panels of 50 x 80 cm precoated with filler were sprayed with the formulations to be tested. Spraying program: Of the RTS basecoat formulation to be tested a first normal layer was applied covering one third of the panel. After the basecoat had become mat and dry by blowing with the spray gun, a second mist coat layer was applied over the first layer covering half of the panel. After drying of the film a third full layer of the RTS mixture was applied covering the complete panel. During application of all layers, the formulation was applied starting by spraying from the right side of the panel towards the left side of the panel. The panels were visually evaluated on extent of underspray coarseness detected.

### Method used for measuring viscosity:

Determination of viscosity of pseudoplastic or thixotropic products using a rotational viscometer, ISO3219.

Volatile Organic Compound level of the ready-to-spray formulation was calculated based on total volume minus water according to the following formula:
VOC = {(100 - [Wv - Ww]) / (100 - [Dc x Ww/Dw])} x Dc x 1000
where Wv = weight percentage of total volatile
Ww = weight percentage of water
Dc = density of the coating in g/I at 23 °C
Dw = density of water in g/l at 23 °C

### Methods used for measuring water sensitivity are:

### 1) Resistance to water droplets.

Result of exposure is evaluated on a 1-10 scale: 1 = very poor resistance, strong swelling or dissolving of the coating; 10 = excellent resistance, no visual change or softening.
Exposed systems: basecoats only.
Aging time basecoat after application: 24 hours at room temperature.
Exposition time: 4 days.

### 2) Resistance to humidity, continuous condensation 38 °C, ISO 6270. Amount and size of blisters are evaluated according to ASTM-D714 scale.

Exposed systems: basecoat / clearcoat systems.
Aging time basecoat/clearcoat systems after application: 1 week at room temperature.
Exposition time in Cleveland humidity cabinet: 240 hours.

Sikkens Autowave® is a commercial aqueous basecoat from Sikkens, and is available to the refinishes and light industrial market. Colors are mixed by a mixing color machine and demineralized water is added just before use to reduce the viscosity for spray application.

Bayhydrol® VP LS2952 is a polyurethane binder commercially available from Bayer. Setalux® 6801 is a polyacrylate dispersion, and Setal 6306 is a polyester dispersion. Both are commercially available from Nuplex.

Pluriol®P600 is a polypropyleneglycol oligomer commercially available from BASF. Cymel® 303LF is a water dispersable hexamethoxymethyl melamine commercially available from Cytec Industries.

### Examples

### Preparation (general)

A glass reaction vessel was charged with the di-alkanol amine and subsequently heated to 80°C under a nitrogen atmosphere. Once the di-alkanol amine was molten the stirrer was started. The anhydride was slowly added to the reaction mixture. The exothermic reaction was controlled by the speed of adding which was chosen for the temperature of the reaction mixture not to exceed 140°C. After all the anhydride was added, the reaction mixture was heated to 160°C. A mono functional acid was optionally introduced to the reaction mixture.

Most of the evolving reaction water was distilled off in 1 hour. Subsequently, the pressure was slowly decreased to ~30 mbar after which the reaction was continued until the acid number reached a value below 5 mg KOH/g resin. The reaction mixture was cooled down to 140°C after which demi-water was added to the reaction vessel until a viscosity in the range of 1-5 Pa.s was reached. The reaction vessel was then discharged and the product was cooled down to room temperature.

Experiment I: Preparation of a polyesteramide based on succinic anhydride and di-isopropanol amine (ZW6017)

A glass reaction vessel was charged with di-isopropanol amine (759 g) and subsequently heated to 80°C under a nitrogen atmosphere. Once the di-isopropanol amine was molten (Tₘ = 42 °C) the stirrer was started. Hexahydro phthalic anhydride (146 g, Tₘ = 34 °C) was added to the reaction mixture over a time period of 15 minutes. Subsequently, succinic anhydride (380 g, Tₘ = 119 °C) was added to the reaction mixture over a time period of 45 minutes.

After all the anhydride was added, the reaction mixture was heated to 160°C. Most of the evolving reaction water was distilled off in 1 hour. Subsequently, the pressure was slowly decreased to -30 mbar after which the reaction was continued until the acid number reached a value of 2.5 mg KOH/g resin. The reaction mixture was cooled down to 140°C after which demi-water (735 g) was added to the reaction vessel and a viscosity of 2.5 Pa.s was reached. The reaction vessel was then discharged and the product was cooled down to room temperature.

Experiment II: Preparation of a polyesteramide based on succinic anhydride and di-isopropanol amine (ZW6015)

A glass reaction vessel was charged with di-isopropanol amine (615 g) and subsequently heated to 80°C under a nitrogen atmosphere. Once the di-isopropanol amine was molten (Tₘ = 42 °C) the stirrer was started. Succinic anhydride (385 g, Tₘ = 119 °C) was added to the reaction mixture over a time period of 30 minutes.

After all the anhydride was added, the reaction mixture was heated to 160°C. Most of the evolving reaction water was distilled off in 1 hour. Subsequently, the pressure was slowly decreased to ~30 mbar after which the reaction was continued until the acid number reached a value of 3.9 mg KOH/g resin. The reaction vessel was then discharged and the product was cooled down to room temperature.

Experiment III: Preparation of a polyesteramide based on succinic anhydride and di-isopropanol amine, modified with 2-ethyl- hexanoic acid (ZW6019)

A glass reaction vessel was charged with di-isopropanol amine (503 g) and subsequently heated to 80°C under a nitrogen atmosphere. Once the di-isopropanol amine was molten (Tₘ = 42 °C) the stirrer was started. Succinic anhydride (315 g, Tₘ = 119 °C) was added to the reaction mixture over a time period of 30 minutes.

After all the anhydride was added, the reaction mixture was heated to 160°C. After 30 min, 2-ethyl hexanoic acid (209 g) was added to the reaction mixture. Most of the evolving reaction water was distilled off in 1 hour. Subsequently, the pressure was slowly decreased to ~30 mbar after which the reaction was continued until the acid number reached a value of 1.4 mg KOH/g resin. The reaction vessel was then discharged and the product was cooled down to room temperature.

The properties of the polyesteramides are thus as follows:

| | Mn | Tg (°C) | Acid value | OH value |
|---|---|---|---|---|
| ZW6015 | 1200 | 55 | 3.9 | 315 |
| ZW6017 | 1200 | 60 | 2.5 | 305 |
| ZW6019 | 1400 | 45 | 1.4 | 197 |

### Examples

### Results

Addition of 10% and 20% to Autowave® of mixtures of 50% cosolvents propylene glycol monopropyl ether or diethyleneglycol methyl ether and 50% water did not show improved overspray/underspray absorption after application of the resulting coating compositions to steel panels and drying. The additions also resulted in VOCs higher than 420 g/l. Table 1 below lists the underspray absorption results obtained for the 10% additive level.

**Table 1**

| | Composition additive | Amount added to waterborne basecoat [w%] | Underspray absorption [1: very poor underspray absorption; 10: excellent underspray absorption |
|---|---|---|---|
| Comp. Ex. 1 | Standard additive (demineralized water) | 10 | 5 |
| Comp. Ex. 2 | 50/50 % w/w propylene glycol monopropyl ether / water | 10 | 4 |
| Comp. Ex. 3 | 50/50 % w/w diethylene glycol methyl ether / water | 10 | 5 |

Autowave® was mixed with several formulations in such a manner that the basecoat composition contained a maximum amount of co-solvent and was still VOC compliant.

**Table 2**

| Viscosities of various ready-to-spray mixtures of base coat and additive formulations. | | | | | | |
|---|---|---|---|---|---|---|
| | Binder type in additive | Binder solids in additive [w%] | Co-solvent in (w%] | Amount added to waterborne basecoat [w%] | η at 100 s⁻¹ [mPa.s] | η at 1000 s⁻¹ [mPa.s] |
| Comp. Ex. 1 | Standard additive (demineralized water) | 0 | 0 | 10 | 145 | 67 |
| Comp. Ex. 4 | Polyacrylate, Setalux 6801 | 7.7 | 14 | 20 | 139 | 66 |
| Comp. Ex. 5 | Polyurethane, Bayhydro VP LS 2952 | 20 | 18 | 20 | 196 | 92 |
| Comp. Ex. 6 | Polyester, Setal 6306 | 20 | 0 | 20 | 101 | 62 |
| Example 1 | Polyesteramide, ZW6015 | 30 | 20 | 20 | 145 | 76 |

An acceptable viscosity is an application viscosity that does not deviate too much from that of the standard (= Comp. Ex. 1). As can be seen from the results in Table 2, acceptable viscosities are achieved with the polyesteramide according to the invention, which is based on 30 wt.% solids - meaning that more coalescing solvent can be added while remaining VOC compliant. With polyacrylate and polyurethane binders in the additive, no more than 10 wt.% of solid binder can be added to achieve acceptable viscosities, meaning that less of the coalescing solvent can be utilized. Incorporation of more than 10 wt.% of polyurethane, for example, would lead to unacceptable high viscosities.

Steel panels were sprayed with RTS mixtures as given in Table 3. Resistance to water droplets was measured for the dried basecoat systems. Resistance to humidity was tested for the complete basecoat/clearcoat system.

**Table 3**

| Resistance to water and resistance to blistering for systems with various additives | | | | | |
|---|---|---|---|---|---|
| | Binder type in additive | Binder solids in additive [w%] | Amount of additive added to waterborne basecoat [w%] | Water sensitivity according method I.C.R. 4.2.1 | Humidity test |
| | | | | | Blisters after 240 hours |
| Comp. Ex. 1 | Standard additive (demineralized water | 0 | 10 | 7 | 7F |
| Comp. Ex. 6 | Polyester, Setal 6306 | 20 | 20 | 2 | 6/7D |
| Example 1 | Polyesteramide, ZW6015 | 30 | 20 | 7.5 | 9F |
| Example 2 | Polyesteramide, ZW6015 | 30 | 10 | 8.5 | 7F |

As can be seen from Table 3, the properties of the compositions containing the polyester-containing additive were poor. In contrast, the polyesteramide composition according to the invention performed significantly better and was at the same level as the standard (= Comp. Ex. 1).

Steel panels were sprayed with RTS mixtures as given in Table 4 for determining Persoz hardness and tackiness. Additionally, larger panels were sprayed with RTS mixtures in order to visually assess underspray absorption. The compositions differ from each other in the non-VOC component used. Relevant properties of the dried basecoats are given in Table 4.

**Table 4**

| Persoz hardness, tackiness, and underspray absorption of basecoats to which various additive compositions had been added | | | | | | | | | |
|---|---|---|---|---|---|---|---|---|---|
| Composition additive formulation | | | | Amount of additive added to waterborne basecoat [wt.% on wet basecoat] | Persoz hardness basecoat | | Tackiness basecoat [10: not tacky; 0: very tacky] | | Underspray absorption * |
| Binder type in additive | Binder solids in additive [wt. %] | Concentration of diethylene glycol monobutyl ether in additive [wt.%] | Concentration of demi-water in additive [wt.%] | | 2 days after application | 9 days after application | 3 hours after application | 5 days after application | directly after application |
| Standard, (demi-water) [CE 1] | 0 | 0 | 100% | 10% | 113 | 126 | 10 | 10 | 5 |
| PEA²), ZW6015 [Ex. 2] | 30 | 20 | 50 | 10 % | 97 | 120 | 8 | 10 | - |
| PEA, ZW6015 [Ex. 1] | 30 | 20 | 50 | 20 % | 82 | 123 | 6 | 10 | - |
| PEA, ZW6017 [Ex. 3] | 30 | 20 | 50 | 20 % | - | - | - | - | 8 |
| No binder [CE 7] | 0 | 20 | 80 | 10 % | 96 | 131 | 10 | 10 | 6 |
| No binder [CE 8] | 0 | 30 | 70 | 10 % | - | - | - | - | 7.5 |
| No binder [CE 9] | 0 | 40 | 60 | 10 % | 73 | 121 | 8 | 10 0 | 8.5 |
| No binder [CE 10] | 0 | 50 | 50 | 10 % | - | - | - | - | 9 |
| Pluriol P600 [CE 11] | 20 | 20 | 60 | 10 % | 34 | 42 | 5 | 6 | - |
| Pluriol P600 [CE 12] | 30 | 0 | 70 | 10 % | - | - | - | - | 5.5 |
| Pluriol P600 [CE 13] | 20 | 20 | 60 | 20 % | 28 | 31 | 4 | 4 | - |
| Cymel ® 303LF ⁴⁾ [CE 14] | 30 | 20 | 50 | 20 % | 27 | 35 | 4 | 5 | - |

| | | | | | | | | | |
|---|---|---|---|---|---|---|---|---|---|
| Note: 1) Underspray absorption [1: very poor underspray absorption; 10: excellent underspray absorption 2) PEA = Polyesteramide 2) Pluriol P600 = Polypropylene glycol 3) Cymel® 303LF = Hexamethoxymethyl melamine | | | | | | | | | |

The results show that the compositions according to the invention display substantially equal tackiness and hardness values as the standard (Comparative Example 1 = CE 1) especially after drying, and are better than those of the Comp. Examples 11-14. The compositions according to the invention don't affect properties in a negative sense in contrast to the compositions used in Comp. Examples 11-14.

The results also show the superiority of the compositions according to the invention in underspray absorption. It should be noted that due to the use of the additive composition according to the invention (Ex. 1-3), the coating compositions in accordance with the invention are VOC compliant, while the coating compositions according to Comp. Ex. 7-10 are not VOC compliant.

## Claims

1. Polyesteramide based on
a. at least one anhydride A1,
b. optionally at least one anhydride A2,
c. at least one di-alkanolamine,
wherein anhydride A1 is present in an amount of 50-100% based on the total amount of anhydride, and anhydride A2 is present in an amount of 0-50% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

2. Monoacid modified polyesteramide based on
a. at least one anhydride A1,
b. optionally at least one anhydride A2,
c. at least one di-alkanolamine,
d. optionally at least one monoacid
wherein anhydride A1 is present in an amount of 50-100% based on the total amount of anhydride, and anhydride A2 is present in an amount of 0-50% based on the total amount of anhydride and the monoacid is present in an amount such that 0-25% of the functional end groups is modified by the monoacid and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

3. Polyesteramide according to claim 2 **characterized in that** the monoacid is chosen from the list benzoic acid, 2-ethyl-hexanoic acid, acetic acid, butyric acid, versatic acid, lauric acid, stearic acid and mixtures of any of them.

4. Polyesteramide according to claim 2 or 3 **characterized in that** 0.5-15% of the functional end groups is modified.

5. Polyesteramide according to anyone of claim 1-4 **characterized in that** the di-alkanolamine is chosen from the list di-isopropanol amine, diethanol amine di-isobutanol amine or a combination of any of them.

6. Polyesteramide according to anyone of claim 1-5 **characterized in that** succinic anhydride as anhydride A1, hexahydro phthalic anhydride as anhydride A2 is used in a ratio of 80/ 20%.

7. Polyesteramide according to anyone of claim 1-6 **characterized in that** it has an OH-value between 300 and 400 mg KOH/g, an acid value between 2 and 8 mg KOH/g and a Tg between 30 and 75°C.

8. Polyesteramide obtainable by a process comprising at least the following steps:
1. reacting 50-100% based on the total amount of anhydride of anhydride A1, optionally together with 0-50% of anhydride A2, with at least one di-alkanolamine to an intermediate product and
2. performing a polycondensation reaction on the intermediate product obtained in the first step,
wherein anhydride A1 is present in an amount of 50-100% based on the total amount of anhydride, and anhydride A2 is present in an amount of 0-50% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

9. Monoacid modified polyesteramide obtainable by a process comprising at least the following steps:
1. reacting 50-100% based on the total amount of anhydride of anhydride A1, optionally together with 0-50% of anhydride A2, with at least one di-alkanolamine to an intermediate product and
2. performing a polycondensation reaction on the intermediate product obtained in the first step,
3. adding a monoacid to the reaction mixture in step 2.
wherein anhydride A1 is present in an amount of 50-100% based on the total amount of anhydride, and anhydride A2 is present in an amount of 0-50% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

10. Monoacid modified polyesteramide obtainable by a process according to claim 9 **characterized in that** the monoacid is chosen from the list benzoic acid, 2-ethyl-hexanoic acid, acetic acid, butyric acid, versatic acid, lauric acid, stearic acid and mixtures of any of them.

11. Process for the preparation of a polyesteramide comprising at least the following steps:
1. reacting 50-100% based on the total amount of anhydride of anhydride A1, optionally together with 0-50% of anhydride A2, with at least one di-alkanolamine to an intermediate product and
2. performing a polycondensation reaction on the intermediate product obtained in the first step,
3. optionally adding a monoacid to the reaction mixture in step 2.
wherein anhydride A1 is present in an amount of 50-100% based on the total amount of anhydride, and anhydride A2 is present in an amount of 0-50% based on the total amount of anhydride and whereby the anhydride A1 is chosen from the list succinic anhydride, methyl succinic anhydride, maleic anhydride or glutaric anhydride or a combination of any of them and the anhydride A2 is chosen from the list hexahydro phthalic anhydride, phthalic anhydride or methyl- hexahydro phthalic anhydride or a combination of any of them.

12. Binder composition comprising at least one polyesteramide as in claim 1-10 and at least one crosslinker.

13. Coating composition comprising the binder composition according to claim 12.

14. Solution comprising a polyesteramide according to anyone of claim 1-10 and at least one solvent for the polyesteramide.

15. Solution according to claim 14 **characterized in that** the polyesteramide is present in an amount of 0.1-35 w% polyesteramide based on the total composition.

16. Solution according to claim 14 or 15 **characterized in that** the solution has a viscosity of 1-5 Pa.s under a shear of 100 s⁻¹ at a polyesteramide concentration of 55-70% (solid content) (Determination according to ISO 3219).

17. Coating composition comprising at least one polyesteramide and at least one component chosen from the list solvent, diluent, crosslinker, pigment, dye and one of the usual additives for coating compositions.

18. Substrate fully or partially coated with a coating composition according to claim 17.

19. Coating obtained after curing a coating composition according to claim 17.

20. Use of a polyesteramide according to anyone of claim 1-10 in a coating application.
